# EUROPÄISCHE PATENTSCHRIFT

(11) **EP 3 151 473 B1**
(45) Veröffentlichungstag und Bekanntmachung des Hinweises auf die Patenterteilung: **17.06.2020**
(21) Anmeldenummer: 16191496.5
(22) Anmeldetag: 29.09.2016
(51) Int. Cl.: H04L 12/403, H04L 12/40

(54) **VERFAHREN ZUR ISOCHRONEN DATENKOMMUNIKATION IN EINEM ECHTZEITFÄHIGEN ETHERNET-DATENNETZWERK**
METHOD FOR ISOCHRONOUS DATA COMMUNICATION IN A REAL-TIME CABLE ETHERNET DATA NETWORK
PROCEDE DE COMMUNICATION ISOCHRONE DE DONNEES DANS UN RESEAU DE DONNEES ETHERNET EN TEMPS REEL

(30) Priorität: 01.10.2015 AT 508302015
(43) Veröffentlichungstag der Anmeldung: 05.04.2017
(73) Patentinhaber: B&R Industrial Automation GmbH, 5142 Eggelsberg (AT)
(72) Erfinder: Bruckner, Dietmar, 5102 Anthering (AT)
(74) Vertreter: Patentanwälte Pinter & Weiss OG

(56) Entgegenhaltungen:
- WO-A2-03/028289
- DE-A1-102005 060 085
- GB-A- 2 419 070
- ALMEIDA L ET AL: "FTT-Ethernet: A Flexible Real-Time Communication Protocol That Supports Dynamic QoS Management on Ethernet-Based Systems", IEEE TRANSACTIONS ON INDUSTRIAL INFORMATICS, IEEE SERVICE CENTER, NEW YORK, NY, US, Bd. 1, Nr. 3, 1. August 2005 (2005-08-01), Seiten 162-172, XP011137482, ISSN: 1551-3203, DOI: 10.1109/TII.2005.852068

## Beschreibung

Die gegenständliche Erfindung betrifft ein Verfahren zur isochronen Datenkommunikation in einem echtzeitfähigen Ethernet-Datennetzwerk, in dem Netzwerkknoten über ein geschaltetes Ethernet-Datennetzwerk miteinander verbunden werden und für die Ethernet-Datenkommunikation zwischen den Netzwerkknoten ein Sendezyklus mit vorgegebener Zykluszeit vorgegeben ist.

In einem Datennetzwerk zur Datenkommunikation ist ein Netzwerkprotokoll implementiert, mit dem Daten in Datenpaketen auf dem Datennetzwerk zwischen den mit dem Datennetzwerk verbundenen Netzwerkknoten übertragen werden. Das heute wohl bekannteste und am weitesten verbreitete Netzwerkprotokoll ist das Ethernet-Protokoll. Ethernet definiert hierzu Datenpakete (auch Datenframe oder Ethernetframe genannt), in denen Daten eines übergeordneten Kommunikationsprotokolls in einem Ethernet-Datenpaket gekapselt übertragen werden können. Hierbei können in einem Ethernet-Datenpaket Daten des Kommunikationsprotokolls mit einer Datenlänge zwischen 46 und 1500 Byte übertragen werden. Die Adressierung im Ethernet-Protokoll erfolgt über die MAC (Media Access Control) Adressen der Netzwerkknoten, die für jedes Netzwerkgerät eindeutig vergeben ist. Ethernet ist aus Sicht des bekannten OSI-Schichtmodells ausschließlich auf den Schichten 1 und 2 implementiert. In den höheren Schichten können verschiedene Kommunikationsprotokolle implementiert sein. Hierbei hat sich eine Vielzahl von Kommunikationsprotokollen etabliert, wie beispielsweise IP auf Schicht 3 oder TCP und UDP auf Schicht 4, um einige weit verbreitete Kommunikationsprotokolle zu nennen.

Hardwaremäßig sind heutige Ethernetsysteme sogenannte geschaltete Datennetzwerke, in denen einzelne Netzwerkknoten nicht direkt miteinander verbunden sein müssen und nicht direkt miteinander kommunizieren können müssen, sondern über Kopplungselemente, sogenannte Netzwerkswitches oder Netzwerkhubs, verbunden sein können. Ein Kopplungselement hat hierzu eine Anzahl von Netzwerkports, an die ein Netzwerkteilnehmer (entweder ein Netzwerknoten oder ein anderes Kopplungselement) angeschlossen werden kann. Ein solches Kopplungselement leitet ein Ethernet-Datenpaket entweder an alle Ports (Hub) oder an (einen) bestimmte(n) Port(s) (Switch) weiter. Damit werden in einem geschalteten Datennetzwerk sogenannte Punkt-zu-Punkt Verbindungen hergestellt, bei denen Ethernet-Datenpakete von einem Netzwerkknoten über eine Anzahl von Kopplungselementen (Hub, Switch) an einen anderen Netzwerkknoten weitergeleitet werden.

Netzwerkknoten, die in der industriellen Automatisierung eingesetzt werden, haben oftmals intern einen 3-Port-Switch verbaut, wobei zwei Ports von außen zugänglich sind und der dritte Port zur internen Verschaltung dient. Damit lassen sich ohne zusätzliche externe Kopplungselemente Linientopologien realisieren, in denen ein Netzwerkknoten mit dem jeweils nächsten Netzwerkknoten in Form einer Linie verbunden ist, was im industriellen Umfeld hilft, den Verkabelungsaufwand zu reduzieren. Selbstverständlich können aber auch externe Netzwerkswitches oder externe Netzwerkhubs zum Aufbau der Netzwerktopologie eingesetzt werden. Grundsätzlich ist jede Netzwerktopologie möglich, also insbesondere eine Sterntopologie, eine Linientopologie, eine Baumtopologie, eine Ringtopologie, usw. und auch beliebige Kombination daraus. Bei einer Ringtopologie sind bekanntermaßen in der Regel spezielle Vorkehrungen zu treffen, um das unkontrollierte Zirkulieren von Datenpaketen mit Mehrfachadresse zu verhindern.

Um Ethernet auch zur industriellen Automatisierung einsetzen zu können, wurden bereits echtzeitfähige Ethernet-Netzwerkprotokolle entwickelt, da das Standard Ethernet-Netzwerkprotokoll bekanntermaßen nicht echtzeitfähig ist. Beispiele bekannter echtzeitfähiger Ethernet-Netzwerkprotokolle sind Modbus/TCP, Ethernet/IP, ProfiNET IRT, EtherCAT oder Ethernet POWERLINK, um nur einige zu nennen. In diesem Zusammenhang spricht man auch oftmals von Industrial Ethernet. Mit diesen echtzeitfähigen Ethernet-Netzwerkprotokollen soll eine für die jeweilige Anwendung ausreichend schnelle und deterministische Datenkommunikation sichergestellt werden. Es soll damit also insbesondere sichergestellt werden, dass ein echtzeitrelevantes Datenpaket innerhalb einer vorgegebenen Zeitspanne von einem sendenden Netzwerkknoten über das Netzwerk zu einem empfangenden Netzwerkknoten übertragen wird. In einer industriellen Automatisierungsumgebung bedeutet Echtzeitfähigkeit z.B., dass zwischen der Erfassung eines Messwertes, Weiterleitung des Messwertes an eine Regelungseinheit, Berechnung eines Stellwertes in der Regelungseinheit aufgrund des Messwertes und Übertragen des Stellwertes an einen Aktuator zur Durchführung einer Handlung eine fest vorgegebene Zeitspanne einzuhalten ist. Bezogen auf das echtzeitfähige Ethernet-Datennetzwerk zur Übertragung dieser Daten muss dabei eine vorgegebene Zeitspanne sichergestellt sein.

Almeida L. et.al.: "FTT-Ethernet: A Flexible Real-Time Communication Protocol That Supports Dynamic QoS Management on Ethernet-Based Systems", IEEE Transactions on Industrial Informatics, Bd. 1, Nr. 3, 1. August 2005*.* offenbart ein Flexible-Time-Triggered (FTT)-Ethernet Protokoll, wobei Switches Kollisionen im Ethernetverkehr auflösen

In einer industriellen Automatisierungsumgebung gibt es meist zumindest einen Master-Netzwerkknoten (in Folge auch kurz Master), der mit zumindest einem zugeordneten, in der Regel mehreren zugeordneten, Slave-Netzwerkknoten (in Folge auch kurz Slaves) kommuniziert. Zur Realisierung eines echtzeitfähigen Ethernet-Datennetzwerkes haben die bekannten echtzeitfähigen Ethernet-Netzwerkprotokolle einen Sendezyklus mit einer vorgebbaren Zykluszeit definiert, innerhalb der der Master normalerweise mit jedem Slave kommunizieren kann. Das umfasst normalerweise zyklisch die Möglichkeit eines Datenpakets vom Master an jeden Slave und umgekehrt auch zumindest ein Datenpaket eines Slaves, normalerweise zumindest ein Datenpaket von jedem Slave, an den zugeordneten Master. Die erreichbare und vorab ermittelbare minimale Zykluszeit ergibt sich aus der Summe der Laufzeiten der Datenpakete. Die Laufzeiten sind hardwareabhängig und ergeben sich aus den Bitübertragungszeiten (Länge, Payload) der Datenpakete, aus der Netzwerkinfrastruktur (z.B. Verzögerungszeiten durch Kopplungselemente) und der Netzwerktopologie. Dabei sind ebenfalls noch die oben genannten Grenzen in der Größe der Ethernet-Datenpakete zu beachten.

Dieser zyklische Datenverkehr (auch als isochroner Datenverkehr bezeichnet), der die Basis der Echtzeitfähigkeit im echtzeitfähigen Ethernet-Netzwerkprotokoll darstellt, wird in der Regel in jedem Sendezyklus durch asynchrone (nicht zyklische) Datenpakete erweitert. Solche asynchronen Datenpakete werden von der nicht den Echtzeitanforderungen unterworfenen Datenkommunikation genutzt, beispielsweise zur Konfiguration der Slaves, zu Visualisierungszwecken oder für Statusabfragen. Für solche asynchronen Datenpakete wird Bandbreite reserviert, d.h., dass in jedem Sendezyklus eine gewisse, definierte Zeit für asynchronen Datenverkehr zur Verfügung steht. Diesen asynchronen Abschnitt eines Sendezyklus müssen sich die Netzwerkknoten aber aufteilen, wofür es in den bekannten echtzeitfähigen Ethernet-Protokollen verschiedene Ansätze gibt.

Insbesondere in der konkreten Umsetzung dieses zyklischen (isochronen) und asynchronen Datenverkehrs unterscheiden sich die bekannten echtzeitfähigen Ethernet-Protokolle. Die bekannten echtzeitfähigen Ethernet-Protokolle unterscheiden sich dabei auch in den Anforderungen an die verwendete Hardware.

WO 2003/028289 A2 zeigt ein echtzeitfähiges Kommunikationsverfahren, wobei ein isochroner und ein asynchroner Teil aufeinander folgen. Der isochrone Teil besteht aus unterschiedlichen Makrozyklen, die in unterschiedliche kleinere Pakete, sogenannte Mikrozyklen, aufgeteilt werden.

Bei beispielsweise POWERLINK, ProfiNET und Ethernet/IP ist die isochrone Datenkommunikation innerhalb eines Sendezyklus vorab fest geplant und eingeteilt. D.h. jeder Netzwercknoten darf nur zu einem vorgegebenen Zeitpunkt innerhalb des Sendezyklus Datenpakete versenden. Damit können Datenkollisionen vermieden werden und es sind für den isochronen Datenverkehr keine Datenpuffer in den Netzwerkknoten notwendig.

Durch diese feste Vorgabe der Zykluszeit eines Sendezyklus und die festgelegte Einteilung eines Sendezyklus in isochronen und asynchronen Datenverkehr wird die Echtzeitfähigkeitdes Ethernet-Protokolls sichergestellt. Die Größe (im Sinne der Anzahl der verbauten Netzwerkknoten) echtzeitfähiger Ethernet-Datennetzwerke steigt aber immer mehr an. Damit werden echtzeitfähige Ethernet-Datennetzwerke in ihren Anforderungen an die Datenkommunikation aber auch inhomogener. Beispielsweise benötigt die zentrale Stromregelung eines Servomotors sehr schnelle Zykluszeiten im Bereich von <500µs. Herkömmliche Sensoren erfassen und senden Messwerte typischerweise wesentlich langsamer, womit für Sensoren langsamere Zykluszeiten im Bereich von 10ms ausreichend sein können. Der Sendezyklus bzw. die Zykluszeit muss aber für das gesamte Datennetzwerk und für alle Netzwerkknoten einheitlich festgelegt werden. Der Sendezyklus eines heutigen Ethernet-Netzwerkprotokolls richtet sich demnach nach dem Netzwerkknoten mit den höchsten Anforderungen an die Zykluszeit.

Damit muss aber auch für Netzwerkknoten mit geringeren Anforderungen an die Zykluszeit in jeden Sendezyklus Bandbreite eingeplant werden, da auch diese Netzwerknoten von Zeit zu Zeit Datenpakete versenden. Dabei wird aber durch solche Netzwerkknoten viel Bandbreite blockiert, was die erreichbare Datenrate des gesamten echtzeitfähigen Ethernet-Datennetzwerkes verringert. Es kann sein, dass ein solcher Netzwerkknoten in mehreren aufeinander folgenden Sendezyklen dieselben Daten versendet, weil die Daten nicht schnell genug aktualisiert werden, das implementierte Ethernet-Netzwerkprotokoll aber das Versenden von Daten erzwingt. Um dieses Problem zu verringern, wurde im POWERLINK Ethernet-Netzwerkprotokoll bereits die Möglichkeit geschaffen, dass sich mehrere Netzwerkknoten verschiedene Sendeslots für isochrone Datenpakete teilen. Damit können langsamere Netzwerkknoten isochrone Datenpakete mit einem Vielfachen der benötigten schnellen Zykluszeit versenden, womit die verfügbare isochrone Bandbreite besser ausgenutzt werden kann. POWERLINK erlaubt in dieser Betriebsart genau einen Multiplikationsfaktor zwischen dem schnellen und dem langsamen Zyklus. Das bedingt aber, dass die Netzwerkknoten, die sich einen langsamen Sendeslot teilen, von ihren Anforderungen her zueinander passen müssen und auch von der Anzahl her passen müssen, damit die Zykluszeit insgesamt optimal werden kann. Wenn sich beispielsweise zwei Netzwerkknoten einen Sendeslot teilen, dann können das nur zwei Netzwerkknoten sein, die jeweils mit der doppelten Zykluszeit (da jeder Netzwerkknoten nur in jeden zweiten Sendezyklus senden kann) das Auslangen finden. Die Planung eines solchen Ethernet-Netzwerkprotokolls ist damit, vor allem bei großen Datennetzwerken, relativ aufwendig. Abgesehen davon bietet die derzeitige Lösung wenig Flexibilität, womit man insbesondere bei großen Dantenetzwerken mit vielen Netzwerkknoten in den Möglichkeiten eingeschränkt ist.

Es ist daher eine Aufgabe der gegenständlichen Erfindung, ein Verfahren anzugeben, mit dem die verfügbare isochrone Bandbreite eines echtzeitfähigen Ethernet Netzwerkprotokolls besser und flexibler ausgenutzt werden kann.

Diese Aufgabe wird erfindungsgemäß dadurch gelöst, dass eine Anzahl k Sendezyklen mit vorgegebener Zykluszeit zu einem Langsamsendezyklus zusammengefasst werden und zwei Netzwerkknoten in diesem Langsamsendezyklus miteinander kommunizieren, indem eine Datenkommunikation dieser zwei Netzwerkknoten in jedem k-ten Sendezyklus vorgesehen ist, und/oder ein Sendezyklus in eine Mehrzahl j Schnellsendezyklen aufgeteilt wird und zwei Netzwerkknoten in diesem Schnellsendezyklus miteinander kommunizieren, indem eine Datenkommunikation dieser zwei Netzwerkknoten j-mal in jedem Sendezyklus vorgesehen ist. Das ermöglicht die Einführung verschiedener Zeitebenen der Datenkommunikation im Datennetzwerk. Neben der

normalen Datenkommunikation im Sendezyklus mit der vorgegebenen Zykluszeit, kann eine langsamere und/oder eine schnellere Datenkommunikation zwischen bestimmten Netzwercknoten realisiert werden. Damit kann die Datenkommunikation im Datennetzwerk sehr flexibel gestaltet werden und die verfügbare Bandbreite kann besser ausgenutzt werden.

Besonders vorteilhaft ist es, wenn ein erster Schnellsendezyklus zwischen einem ersten und einem zweiten Netzwerkknoten implementiert wird und ein zweiter Schnellsendezyklus zwischen dem zweiten Netzwerkknoten und einem dritten Netzwerkknoten implementiert wird, wobei der erste Schnellsendezyklus und der zweite Schnellsendezyklus zeitlich zueinander versetzt sind, sodass der zweite Netzwerkknoten ein erstes Datenpaket vom ersten Netzwerkknoten empfängt und gleichzeitig ein zweites Datenpaket an den dritten Netzwerkknoten sendet. Damit können diese Netzwerkknoten mit Beanspruchung geringer Bandbreite der Datenkommunikation auf schnelle Weise Daten untereinander austauschen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 und 2 die Kommunikation auf einem echtzeitfähigen Ethernet-Datennetzwerk nach dem Stand der Technik,
Fig.3 eine erste Umsetzung der erfindungsgemäßen isochronen Datenkommunikation,
Fig.4 eine zweite Umsetzung der erfindungsgemäßen isochronen Datenkommunikation und
Fig.5 die Synchronisierung mehrere Slaves über Schnellsendezyklen.

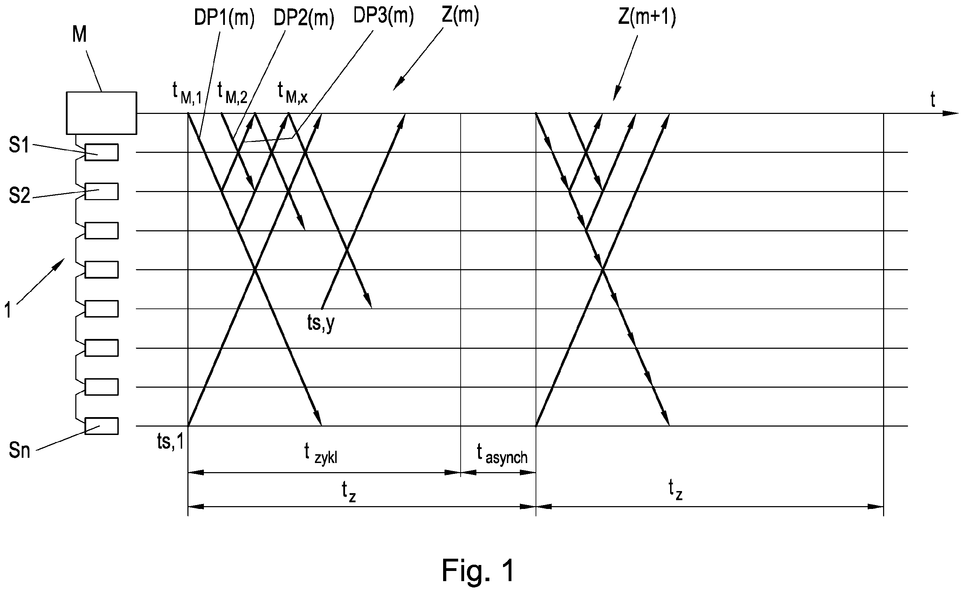

Das der Erfindung zugrunde liegende echtzeitfähige Ethernet-Netzwerkprotokoll wird anhand der Fig.1 erläutert. Hierbei wird eine beispielhafte Netzwerktopologie in Form einer Linientopologie herangezogen, in der ein Master M mit einer Reihe von in Linie geschalteten Slaves S1 ... Sn zu einem Ethernet-Datennetzwerk 1 verbunden ist. Die Slaves S1 ... Sn sind hier als Netzwerkgeräte mit integriertem 3-Port Switch (Kopplungselement) ausgeführt, was eine solche Linientopologie ohne externe Kopplungselemente ermöglicht. Der Master M kann in jedem Sendezyklus Z, mit vorgegebener Zykluszeit t_{z}, mit jedem Slave S1 ... Sn kommunizieren, indem am Ethernet-Datennetzwerk 1 Ethernet-Datenpakete DP (in weitere Folge einfach auch als Datenpakete DP bezeichnet) versendet werden. Ein versandtes Datenpaket DP ist in Fig.1 als Pfeil angedeutet, wobei die Pfeilspitze die Senderichtung (also von Master M zu einem Slave S oder umgekehrt) angibt. Jede waagrechte Linie ist einem Netzwerkknoten (Master M oder Slaves S1 ... Sn) zugeordnet und stellt einen Zeitstrahl dar. Die netzwerkbedingte Latenz beim Übertragen der Datenpakete DP über das Ethernet-Datennetzwerk 1 wird durch die schrägen Pfeile angedeutet, wobei die Verarbeitungsdauer der Datenpakete DP in den Kopplungselementen und die Latenz durch die endliche Ausbreitungsgeschwindigkeit im Medium (Kupferkabel, Lichtwellenleiter) zusammengefasst und vereinfacht als konstant angenommen werden.

Ein Sendezyklus Z ist im Ethernet-Netzwerkprotokoll zeitlich genau eingeteilt, indem die Zeitpunkte t_{M,1}, t_{M,2}, ..., t_{M,x}, t_{S,1}, ..., t_{S,y} festgelegt sind, zu denen der Master M oder die Slaves S1 ... Sn Datenpakete DP versenden dürfen. Damit können Datenkollisionen am Ethernet-Datennetzwerk 1 (bzw. Verzögerungen durch Anwachsen von Switchqueues) vermieden werden. Nachdem Ethernet eine Vollduplex-Datenkommunikation erlaubt, können aber auf einem Netzwerkabschnitt gleichzeitig Datenpakte DP in beiden Richtungen unterwegs sein. Damit weiß jeder der beteiligten Netzwerkknoten (Master M, Slaves S), zu welcher Zeit innerhalb eines Sendezyklus Z er Datenpakete DP versenden darf, und wann er welche empfangen soll.

Diese Zeitpunkte t_{M}, tₛ innerhalb des Sendezyklus Z können vorab sehr genau geplant werden, wenn bekannt ist, wie viele Daten (Byte) in einem Datenpaket DP übertragen werden. Je größer das zu erwartende Datenpaket DP ist, umso weiter auseinander sind die Zeitunkte t_{M}, tₛ. Ist die Datengröße vorab nicht bekannt, dann kann von einer maximalen Datengröße, z.B. der maximalen Framegröße eines Ethernetframes, ausgegangen werden. Zwischen zwei Datenpaketen DP ist auch jeweils eine vorgegebene Pause einzuhalten. Die Anzahl der Netzwerkknoten, Master M und Slaves S1 ... Sn, und die Größe der versendeten Daten ist damit auch mitbestimmend für die erzielbare Zykluszeit t_{z}.

In Fig.1 sendet der Master M im Sendezyklus Z(m) ein Datenpaket DP1(m) an den letzten Slave Sn. Dieses Datenpaket DP1(m) könnte aber auch ein Summenrahmen sein, der Daten für alle Slaves S1 ... Sn enthält (angedeutet im Sendzyklus Z(m+1)) und von dem die Slaves S1 ... Sn ihre Daten lesen. Zu einem festgelegten Zeitpunkt t_{M,2} danach sendet der Master M das nächste Datenpaket DP2(m), hier z.B. an den Slave S2. Zum selben Zeitpunkt kann der Slave S2 auch ein Datenpaket DP3(m) an den Master M senden. Dieses Prinzip wird auch von den restlichen Netzwerkknoten eingehalten, wobei nicht jeder Slave S1 ... Sn ein Datenpaket DP erhalten oder senden muss. Die Datenkommunikation am Ethernet-Datennetzwerk 1 ist durch die Vorgabe der Zeitpunkte t_{M}, t_{S} aber vorteilhaft so geplant, dass die Datenpakete DP von den Slaves S1 ... Sn am Master M hintereinander und ohne zeitliche Lücke (abgesehen von einer einzuhaltenden Pause) eintreffen. Dieser Kommunikationsablauf wiederholt sich dann in den nachfolgenden Sendezyklen Z(m+k).

Diese geplante Datenkommunikation findet zyklisch statt und es ist in jedem Sendezyklus Z ein zeitlicher Abschnitt t_{zykl} für diesen isochronen Datenverkehr, durch den die Echtzeitfähigkeit implementiert ist, vorgesehen. In jedem Sendezyklus Z ist aber auch ein Abschnitt t_{asynch} für asynchronen Datenverkehr reserviert, in dem Ethernet-Datenkommunikation stattfindet, die keine harten Echtzeitanforderungen erfüllen muss. Wenn sich die zyklische Kommunikation von Zyklus zu Zyklus unterscheidet (wie in Fig. 1 zwischen Z(m) und Z(m+1) beispielhaft angedeutet), dann gibt es zumindest eine maximale Periodendauer (k Sendezyklen Z, im Folgenden Langsamsendezyklus genannt), innerhalb derer sich die isochronen Sendemuster (nicht notwendigerweise die Dateninhalte) exakt wiederholen, d.h. die zyklischen Datenpakete in Z(m) sind gleich denen in Z(m+k). In jedem einzelnen Sendezyklus Z kann sich aber das Verhältnis zwischen t_{zykl} und t_{asynch} ändern, je nach Anzahl der geplanten zyklischen Datenpakete DP.

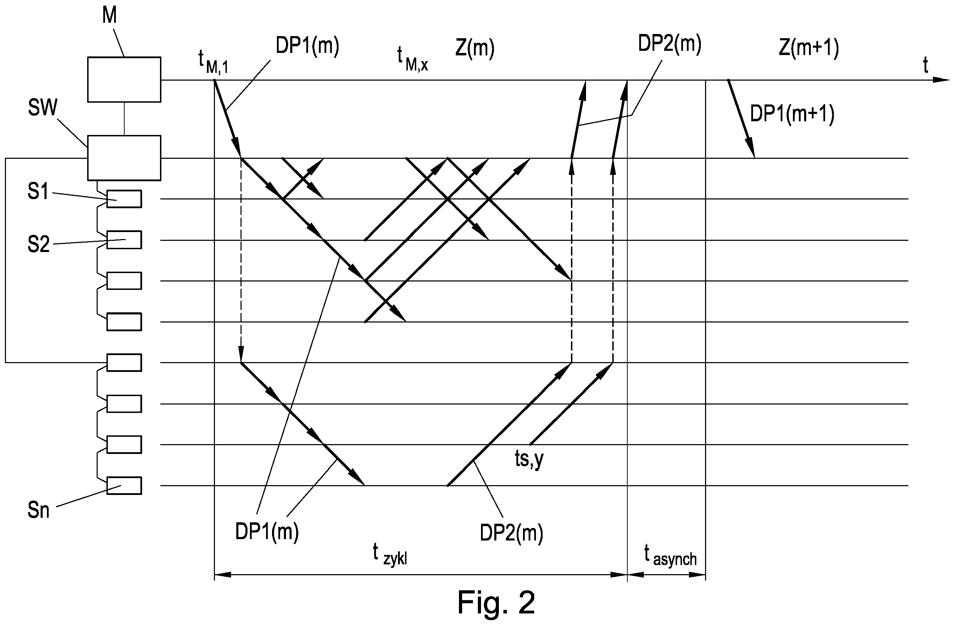

Dieses Kommunikationsprinzip gilt natürlich auch in anderen Netzwerktopologien, wie anhand von Fig.2 am Beispiel einer Baumtopologie beschrieben wird. Hier ist mittels eines externen Netzwerkswitches SW eine Sterntopologie aufgebaut, wobei in jedem Zweig eine Linientopologie, wie in der Fig.1 beschrieben, realisiert ist. Der Master M ist ebenfalls mit dem Netzwerkswitch SW verbunden. Im gezeigten Beispiel wird zum Zeitpunkt t_{M} zu Beginn jedes Sendezyklus Z ein Datenpaket DP1(m) in Form eines Summenrahmens an alle Slaves S1 ... Sn gesendet. Dieses Datenpaket DP1(m) wird vom Netzwerkswitch SW in die beiden Zweige weitergeleitet und dort an alle Slaves S1 ... Sn gesendet. Die anderen Datenpakete DP werden dann wieder zu den dafür vorgesehenen Zeitpunkten t_{M,x}, t_{S,y} innerhalb des Sendezyklus Z(m) versendet. Hier ist allerdings zu bedenken, dass die Datenpakete DP, die von den Slaves S1 ... Sn an den Master M zurückgesendet werden, vorzugsweise so zu planen sind, dass im Master M und im dazwischenliegenden Netzwerkswitch SW keine Datenstaus entstehen können. Der Zeitpunkt des Datenpaketes DP2(m) vom Slave Sn an den Master M ist z.B. so geplant, dass dieses Datenpaket DP2(m) nicht mit anderen Datenpaketen aus dem anderen Zweig der Baumtopologie kollidiert, wie in Fig.2 dargestellt. Die zwischen Master M und Netzwerkswitch SW hin- und hergehenden Datenpakete DP sind zwecks Übersichtlichkeit in Fig.2 nur teilweise dargestellt.

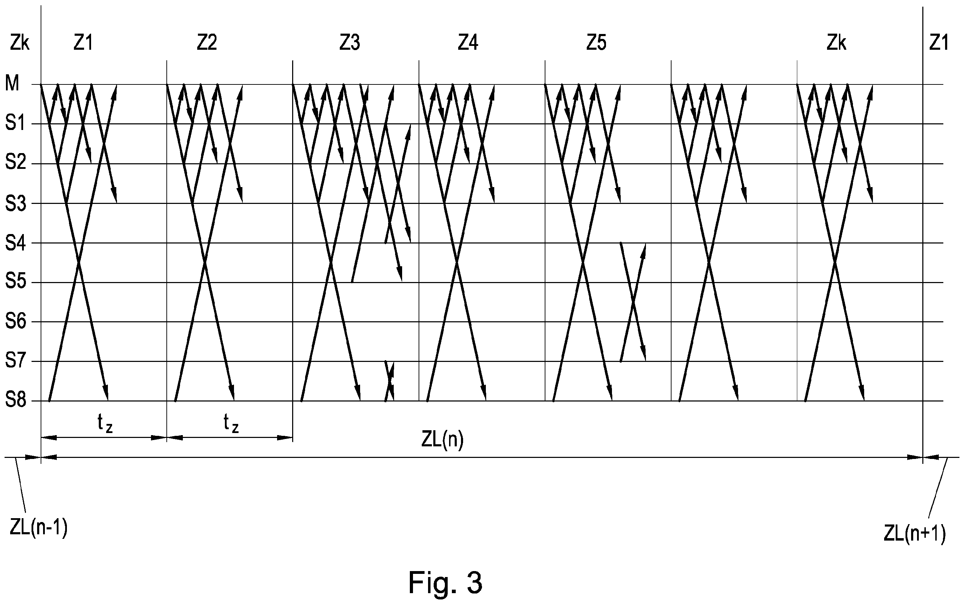

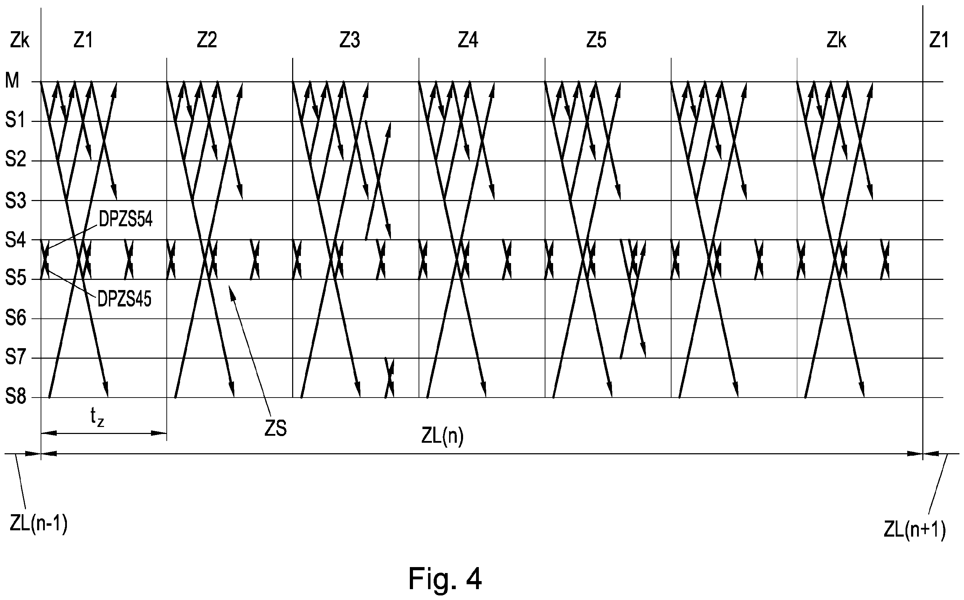

Das erfindungsgemäße Verfahren zur isochronen Datenkommunikation wird nachfolgend anhand der Fig.3 und 4 erläutert. Hierbei wird, ohne Beschränkung der Allgemeinheit, wieder von einer einfachen Linientopologie (die hier nicht mehr dargestellt ist) wie in Fig.1 ausgegangen. Im isochronen Abschnitt t_{zykl} eines Sendezyklus Z(m) findet wieder die oben beschriebene, zeitlich festgelegte isochrone Datenkommunikation statt.

Um langsameren Netzwerkknoten die Möglichkeiten zu geben, in längeren Sendezyklen zu kommunizieren, ist in der Ausgestaltung nach Fig.3 vorgesehen, dass mehrere aufeinanderfolgende Sendezyklen Z zu einem Langsamsendezyklus ZL zusammengefasst werden. Im dargestellten Beispiel werden jeweils k (hier k=7) aufeinanderfolgende Sendezyklen Z1, ..., Zk zum Langsamsendezyklus ZL(n) zusammengefasst. Dieser Langsamsendezyklus ZL mit den umfassten Sendezyklen Z1, ..., Zk wiederholt sich ständig. Das bedeutet, dass sich das Sendemuster der Datenpakete DP, bestimmt durch die einzelnen Sendezyklen Z1, ..., Zk, in jedem Langsamsendezyklus ZL(n) wiederholt. Damit können bestimmen Netzwerkknoten, wie beispielsweise der Master M und die Slaves S1, S2, S3, S8 mit dem Sendezyklus Z miteinander auf dem Ethernet-Datennetzwerk 1 kommunizieren. Der Master M und der Slave S5, sowie jeweils die Slaves S1, S4 und S7, S8 und S4, S7 kommunizieren mit dem langsameren Langsamsendezyklus ZL. Das bedeutet, dass diese Netzwerkknoten nur in jedem Langsamsendezyklus ZL(n) Daten austauschen. Für die langsamere Datenkommunikation zwischen Master M und Slave S5, sowie den Slaves S1, S4 und S7, S8 ist der Sendezyklus Z3 des jeweiligen Langsamsendezyklus ZLvorgesehen. Für die langsamere Datenkommunikation zwischen den Slaves S4, S7 ist der Sendezyklus Z5 des jeweiligen Langsamsendezyklus ZLvorgesehen. Das Sendemuster des Langsamsendezyklus ZL, also die Zeitpunkte in denen Datenpakete gesendet oder empfangen werden, wiederholt sich in jedem Langsamsendezyklus ZL. Im beschriebenen Ausführungsbeispiel erfolgt die Datenkommunikation zwischen Master M und Slave S5, sowie den Slaves S1, S4 und den Slaves S7, S8, immer im dritten Sendezyklus Z3 jedes Langsamsendezyklus ZL. Die Slaves S4, S7 kommunizieren immer im fünften Sendezyklus Z5 des Langsamsendezyklus ZL. Selbstverständlich muss hierbei nicht immer in beide Richtungen kommuniziert werden. Ein Slave S könnte auch nur an den Master M senden, bzw. umgekehrt. Genauso könnte ein Netzwerkknoten im Langsamsendezyklus ZL auch mehrmals Datenpakete versenden, also in verschiedenen Sendezyklen Z1, ..., Zk.

Hier ist anzumerken, dass sich auch die Sendemuster jedes Sendezyklus Z wiederholen, d.h. in jedem Sendezyklus Z werden zu denselben Zeitpunkten Datenpakete gesendet oder empfangen, abgesehen von den dem Langsamsendezyklus ZL(n) zugeordneten Datenpaketen.

Dabei ist es insbesondere auch möglich, dass gewisse Netzwerkknoten, wie z.B. der Master M, sowohl im Sendezyklus Z Datenpakete versendet, als auch im langsameren Langsamsendezyklus ZL. Ein Netzwerkknoten, wie z.B. der Slave S4, kann auch mit mehreren anderen Netzwerkknoten, wie z.B. den Slaves S1, S7, im Langsamsendezyklus ZL kommunizieren.

Für die langsamere Datenkommunikation im Langsamsendezyklus ZL kann die in den Sendezyklen Z freie isochrone Bandbreite genutzt werden. In der Planung der Datenkommunikation (bzw. der Absendezeitpunkte t_{M}, tₛ der isochronen Datenpakete) können die langsameren Datenpakete DPL in freie Sendeslots des isochronen Datenverkehrs der Sendezyklen Z eingeplant werden. Hier muss lediglich darauf geachtet werden, dass es zu keinen Datenkollisionen am Datennetzwerk kommt. Eine vorteilhafte Ausgestaltung sieht so aus, dass die Datenpakete im Langsamsendezyklus ZL(n) zeitlich möglichst eng an die Datenpakete in den Sendezyklen Z1, ..., Zk geschedulet werden, damit die verbleibende asynchrone Zeit möglichst breit bleibt. Das erleichtert die Planung bzw. Ausnutzung des asynchronen Datenverkehrs im Anschluss an den isochronen Datenverkehr.

Es kann im Ethernet-Datennetzwerk 1 aber auch Netzwerkknoten geben, die mit einem schnelleren Schnellsendezyklus ZS Daten über das Ethernet-Datennetzwerk 1 austauschen wollen. Um diesen schnellen Schnellsendezyklus ZS nicht auch den anderen Netzwerkknoten aufzuzwingen, kann erfindungsgemäß auch vorgesehen sein, dass bestimmte Netzwercknoten mit einem Schnellsendezyklus ZS kommunizieren, der kürzer ist, als die Zykluszeit t_{zykl} eines Sendezyklus Z, wie in Fig.4 dargestellt. Im Ausführungsbeispiel nach Fig.4 ist jeder Sendezyklus Z auf j (hier j=3) Schnellsendezyklen ZS aufgeteilt. D.h., dass Netzwerkknoten innerhalb eines Sendezyklus Z j-mal Daten miteinander austauschen können. In Fig.4 ist beispielsweise zwischen den Slaves S4, S5 eine Datenkommunikation nach dem schnelleren Schnellsendezyklus ZS vorgesehen. Das bedeutet, dass die Slaves S4, S5 innerhalb eines Sendezyklus Z j-mal miteinander kommunizieren, indem diese Datenpakete DPZS45, DPZS54 austauschen. Das kann, muss aber nicht, das Versenden von Datenpaketen DPZS45, DPZS54 in beide Richtungen umfassen. Gemäß der Systematik der erfindungsgemäßen Datenkommunikation wiederholt sich der Schnellsendezyklus ZS auch in jedem Sendezyklus Z und damit auch in jedem Langsamsendezyklus ZL(n). Auch hier ist es möglich, dass ein Netzwerkknoten mehrmals im Schnellsendezyklus ZS Datenpakete versendet kann, auch an verschiedene andere Netzwerkknoten.

Der Schnellsendezyklus ZS ist insbesondere für Querverkehr zwischen zwei im Ethernet-Datennetzwerk 1 benachbarten oder in der Nähe befindlichen Netzwerkknoten interessant, um direkt Daten auszutauschen, ohne über den Master M zu gehen.

Der Schnellsendezyklus ZS ist allerdings nicht auf Querverkehr eingeschränkt, sondern es kann auch Datenkommunikation nach dem Schnellsendezyklus ZS zwischen Master M und einem Slave S stattfinden. Ebenso müssen die an direkten Querverkehr beteiligten Netzwerkknoten nicht unmittelbar im Datennetzwerk 1 benachbarte Netzwerkknoten sein.

Damit erhält man praktisch drei Zeitebenen, in denen die isochrone Datenkommunikation ablaufen kann. Eine schnelle Zeitebene in Form eines Schnellsendezyklus ZS, eine normale Zeitebene in Form eines Sendezyklus Z und eine langsame Zeitebene in Form eines Langsamsendezyklus ZL.

Mit dem Langsamsendezyklus ZL und/oder dem Schnellsendezyklus ZS kann damit erreicht werden, dass die normale echtzeitfähige Datenkommunikation auf dem Ethernet-Datennetzwerk 1 in einem festgelegten Sendezyklus Z ablaufen kann, wobei für langsamere und/oder schnellere Netzwerkknoten zusätzlich eine entsprechend langsamere und/oder schnellere Datenkommunikation möglich ist. Auf diese Weis kann die verfügbare isochrone Bandbreite des Ethernet-Netzwerkprotokolls sehr flexibel und optimal ausgenutzt werden. Die Echtzeit-Datenkommunikation kann daher an die jeweilige Anwendung und/oder an die jeweilige Netzwerktopologie flexibel angepasst werden. Die Datenkommunikation kann bei bekannter Netzwerktopologie vorab genau geplant werden, um Datenkollisionen am Ethernet-Datennetzwerk 1 zu vermeiden.

In jeder Zeitebene (Langsamsendezyklus ZL, Sendezyklus Z, Schnellsendezyklus ZS) kann ein Netzwerkknoten auch mehrere Datenpakete an einen bestimmten Empfänger senden, wenn z.B. mehr als 1500 Byte an Daten zu senden sind. Ein Netzwerkknoten kann im Schnellsendezyklus ZS oder im Langsamsendezyklus ZL auch jedes Mal unterschiedliche Daten senden. Dabei weist der Langsamsendezyklus ZL(n) die größte Periodendauer auf und die Sendemuster der geplanten isochronen Datenpakete wiederholt sich in jedem Langsamsendezyklus ZL(n).

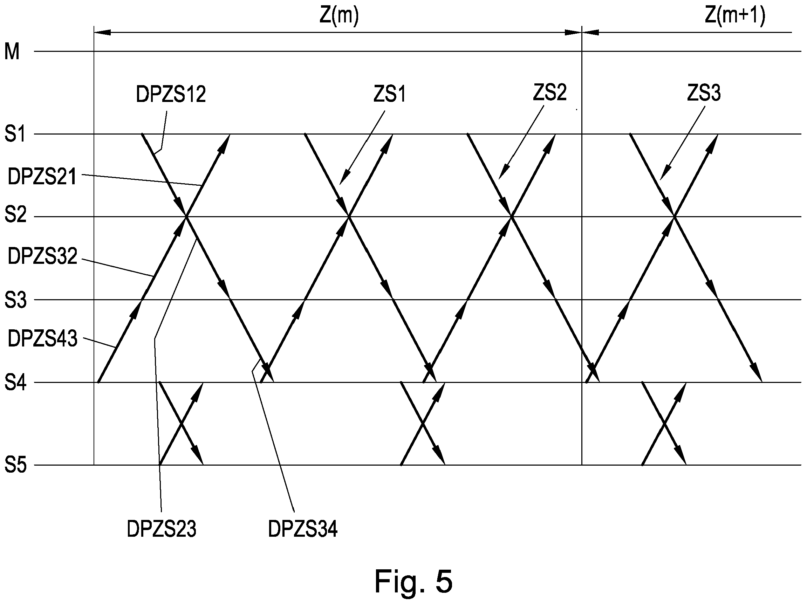

Ein Schnellsendezyklus ZS kann auch vorteilhaft in einer Anwendung eingesetzt werden, in der sich mehrere in Linie verschaltete Netzwerkknoten jeweils mit ihren Nachbarn synchronisieren müssen, also Daten austauschen müssen. Dabei können die Schnellsendezyklen ZS für die Datenkommunikation zwischen den jeweiligen Netzwerkknoten so eingeplant werden, dass zu einem bestimmten Zeitpunkt Datenpakete von einem benachbarten Netzwercknoten empfangen und gleichzeitig Datenpakete an den anderen benachbarten Netzwercknoten gesendet werden, wie in Fig.5 dargestellt. "Gleichzeitig" bedeutet hierbei idealerweise, dass ein erster Slave ein Datenpaket DP an den nächsten Slave zu einem Zeitpunkt sendet, als ob ein Datenpaket von diesem ersten Slave einfach durchgeleitet werden würde. In diesem Ausführungsbeispiel ist vorgesehen, dass sich die Slaves S1, S2, S3, S4 untereinander synchronisieren. Die Datenkommunikation im Sendezsyklus Z(m) bzw. im Langsamsendezyklus ZL ist der Übersicht halber in Fig.5 nicht dargestellt. Im gezeigten Ausführungsbeispiel ist jeweils ein Schnellsendezyklus ZS1, ZS2, ZS3 zwischen benachbarten Netzwerkknoten in Form der Slaves S1, S2, S3, S4 vorgesehen, wobei der Schnellsendezyklus ZS1 für die Datenkommunikation zwischen den Slaves S1 und S2, der Schnellsendezyklus ZS2 für die Datenkommunikation zwischen den Slaves S2 und S3 und der Schnellsendezyklus ZS3 für die Datenkommunikation zwischen den Slaves S3 und S4 vorgesehen ist. Die Schnellsendezyklen ZS1, ZS2, ZS3 sind vorzugsweise zeitlich so zueinander versetzt, dass ein Slave S gleichzeitig ein Datenpaket empfängt und sendet. Der Slave S2 erhält beispielsweise ein Datenpaket DPZS12 vom Slave S1 und sendet gleichzeitig ein Datenpaket DPZS23 an den Slave S3. Damit können sich in einem Sendezyklus Z(m) viele benachbarte Netzwerkknoten untereinander synchronisieren, ohne die herkömmliche Datenkommunikation im Sendezyklus Z(m) wesentlich zu stören. Dieses gleichzeitige Senden von Datenpaketen kann natürlich auch, muss aber nicht, für die umgekehrte Senderichtung (also von einem Slave zum Master) vorgesehen sein, wie in Fig.5 mit den Datenpaketen DPZS43, DPZS32, DPZS21 dargestellt.

Die Zykluszeit t_{z} eines Sendezyklus Z und die Anzahl k der Sendezyklen Z1, ..., Zk eines Langsamsendezyklus ZL sind Netzwerkparameter, d.h. im ganzen Datennetzwerk 1 gleich. Die Datenkommunikation eines Netzwerkknotens kann so geplant werden, dass diese in jedem Sendezyklus Z erfolgt (normaler Sendezyklus) und/oder in einem oder mehreren der k Sendezyklen Z1, ..., Zk (im Zuge des Langsamsendezyklus ZL). Der Schnellsendezyklus ZS kann für jeden Netzwerkknoten individuell geplant werden. Also beispielsweise die Anzahl j zwischen zwei Slaves (z.B. j=3 der Slaves S1, S2 in Fig.5) anders, als eine Anzahl j zwischen einem Slave und einem Master oder zwischen anderen Slaves (wie z.B. j=2 der Slaves S4, S5 in Fig.5). In einem typischen echtzeitfähigen Ethernet Datennetzwerk 1 kann die Anzahl k beispielsweise eine Ganzzahl im Bereich 1 bis 256 sein und die Anzahl j beispielsweise eine Ganzzahl im Bereich 1 bis 64 sein.

Als Referenzzeit der drei Zeitebenen (Langsamsendezyklus ZL, Sendezyklus Z, Schnellsendezyklus ZS) wird vorzugsweise die Periodendauer des Sendezyklus Z oder des Langsamsendezyklus ZL verwendet. D.h., dass sich die Zykluszeit t_{z} eines Sendezyklus Z entsprechend der Referenzzeit ergibt.

Selbstverständlich ist es auch denkbar in einem Datennetzwerk 1 nur zwei der Zeitebenen zu realisieren, wobei eine Zeitebene der Sendezyklus Z ist.

## Patentansprüche

1. Verfahren zur isochronen Datenkommunikation in einem geschalteten, echtzeitfähigen Ethernet-Datennetzwerk (1), in dem Netzwerkknoten (M, S1, ..., Sn) über das Ethernet-Datennetzwerk (1) miteinander verbunden werden und für die Ethernet-Datenkommunikation zwischen den Netzwerkknoten (M, S1, ..., Sn) ein Sendezyklus (Z) mit vorgegebener Zykluszeit (t_{z}) vorgegeben ist, **dadurch gekennzeichnet, dass** eine Anzahl (k) Sendezyklen (Z1, ..., Zk) mit vorgegebener Zykluszeit (t_{z}) zu einem Langsamsendezyklus (ZL) zusammengefasst werden und zwei Netzwerkknoten (M, S1, ..., Sn) in diesem Langsamsendezyklus (ZL) miteinander kommunizieren, indem eine Datenkommunikation dieser zwei Netzwerkknoten (M, S1, ..., Sn) in jedem k-ten Sendezyklus (Z) vorgesehen ist, und/oder ein Sendezyklus (Z) in eine Mehrzahl (j) Schnellsendezyklen (ZS) aufgeteilt wird und zwei Netzwerkknoten (M, S1, ..., Sn) in diesem Schnellsendezyklus (ZS) miteinander kommunizieren, indem eine Datenkommunikation dieser zwei Netzwerkknoten (M, S1, ..., Sn) j-mal in jedem Sendezyklus (ZS) vorgesehen ist.

2. Verfahren nach Anspruch 1, **dadurch gekennzeichnet, dass** ein erster Schnellsendezyklus (ZS1) zwischen einem ersten und einem zweiten Netzwerkknoten (S1, S2) implementiert wird und ein zweiter Schnellsendezyklus (ZS2) zwischen dem zweiten Netzwerkknoten (S2) und einem dritten Netzwerkknoten (S3) implementiert wird, wobei der erste Schnellsendezyklus (ZS1) und der zweite Schnellsendezyklus (ZS2) zeitlich zueinander versetzt sind, sodass der zweite Netzwerkknoten (S2) ein erstes Datenpaket (DPZS12) vom ersten Netzwerkknoten (S1) empfängt und gleichzeitig ein zweites Datenpaket (DPZS23) an den dritten Netzwerkknoten (S3) sendet.

## Claims

1. Method for isochronous data communication in a switched, realtime-capable Ethernet data network (1) in which network nodes (M, S1, ..., Sn) are connected to one another via a switched Ethernet data network (1) and a transmission cycle (Z) having a prespecified cycle time (t_{z}) is provided for the Ethernet data communication between the network node (M, S1, ..., Sn), **characterized in that** a number (k) of transmission cycles (Z1, ..., Zk) having a prespecified cycle time are combined to create a slow transmission cycle (ZL) and two network nodes (M, S1, ..., Sn) communicate with one another in this slow transmission cycle (ZL) **in that** data communication of these two network nodes (M, S1, ..., Sn) is provided in each k^{th} transmission cycle (Z), and/or a transmission cycle (Z) is divided into a plurality (j) of rapid transmission cycles (ZS) and two network nodes (M, S1, ..., Sn) communicate with one another in this rapid transmission cycle (ZS) **in that** data communication of these two network nodes (M, S1, ..., Sn) is provided j times in each transmission cycle (ZS).

2. Method according to claim 1, **characterized in that** a first rapid transmission cycle (ZS1) is implemented between a first and a second network node (S1, S2) and a second rapid transmission cycle (ZS2) is implemented between the second network node (S2) and a third network node (S3), wherein the first rapid transmission cycle (ZS1) and the second rapid transmission cycle (ZS2) are temporally offset to one another so that the second network node (S2) receives a first data packet (DPZS12) from the first network node (S1) and simultaneously transmits a second data packet (DPZS23) to the third network node (S3).

## Revendications

1. Procédé de communication isochrone de données dans un réseau de données Ethernet (1) commuté, en temps réel, dans lequel des nœuds de réseau (M, S1, ..., Sn) sont reliés par l'intermédiaire du réseau de données Ethernet (1), et un cycle d'émission (Z) présentant une durée de cycle (t_{z}) prédéfinie est spécifié pour la communication de données Ethernet entre les nœuds de réseau (M, S1, ..., Sn), **caractérisé en ce qu'un** certain nombre (k) de cycles d'émission (Z1, ..., Zk) présentant une durée de cycle (t_{z}) prédéfinie sont combinés pour former un cycle d'émission lent (ZL), et **en ce que** deux nœuds de réseau (M, S1, ..., Sn) communiquent ensemble dans ledit cycle d'émission lent (ZL) par l'établissement d'une communication de données desdits deux nœuds de réseau (M, S1,..., Sn) à chaque k-ème cycle d'émission (Z) et/ou par la division d'un cycle d'émission (Z) en une pluralité (j) de cycles d'émission rapides (ZS) et par la communication entre deux nœuds de réseau (M, S1,..., Sn) dans ledit cycle d'émission rapide (ZS), par l'établissement d'une communication de données desdits deux nœuds de réseau (M, S1, ..., Sn) j fois dans chaque cycle d'émission (ZS).

2. Procédé selon la revendication 1, **caractérisé en ce qu'un** premier cycle d'émission rapide (ZS1) est mis en œuvre entre un premier et un deuxième nœud de réseau (S1, S2), et **en ce qu'**un second cycle d'émission rapide (ZS2) est mis en œuvre entre le deuxième nœud de réseau (S2) et un troisième nœud de réseau (S3), le premier cycle d'émission rapide (ZS1) et le second cycle d'émission rapide (ZS2) étant décalés l'un par rapport à l'autre dans le temps, de sorte que le deuxième nœud de réseau (S2) reçoive un premier paquet de données (DPZS12) du premier nœud de réseau (S1) et envoie simultanément un second paquet de données (DPZS23) au troisième nœud de réseau (S3).
